**Europäisches Patentamt**

**European Patent Office**

**Office européen des brevets**

(19)

(11) Numéro de publication : **0 360 629 B1**

(12) # FASCICULE DE BREVET EUROPEEN

(45) Date de publication du fascicule du brevet :
**16.12.92 Bulletin 92/51**

(51) Int. Cl.$^5$ : **G21C 19/02, G21C 17/10**

(21) Numéro de dépôt : **89402015.5**

(22) Date de dépôt : **13.07.89**

(54) **Dispositif d'instrumentation du coeur d'un réacteur nucléaire à eau sous pression et procédé et dispositif d'extraction et de mise en place de ce dispositif d'instrumentation.**

(30) Priorité : **25.08.88 FR 8811224**

(43) Date de publication de la demande :
**28.03.90 Bulletin 90/13**

(45) Mention de la délivrance du brevet :
**16.12.92 Bulletin 92/51**

(84) Etats contractants désignés :
**BE CH DE ES GB LI**

(56) Documents cités :
**EP-A- 0 233 424**
**EP-A- 0 238 390**
**FR-A- 2 065 512**
**FR-A- 2 339 939**
**FR-A- 2 585 870**

(73) Titulaire : **FRAMATOME**
**Tour Fiat 1, Place de la Coupole**
**F-92400 Courbevoie (FR)**

(72) Inventeur : **Chevereau, Gérard**
**84 Avenue Thiers**
**F-93340 Le Raincy (FR)**

(74) Mandataire : **Bouget, Lucien et al**
**Cabinet Lavoix 2, Place d'Estienne d'Orves**
**F-75441 Paris Cédex 09 (FR)**

EP 0 360 629 B1

## Description

L'invention concerne un dispositif d'instrumentation d'un réacteur nucléaire à eau sous pression et un procédé et un dispositif d'extraction et de mise en place de ce dispositif d'instrumentation.

Les réacteurs nucléaires à eau sous pression comportent généralement une cuve de forme globalement cylindrique disposée en service avec son axe vertical et fermée à sa partie supérieure par un couvercle bombé amovible. Le coeur du réacteur, constitué par des assemblages combustibles de forme prismatique juxtaposés est disposé à l'intérieur de la cuve dans laquelle il est plongé dans l'eau sous pression de refroidissement du réacteur, lorsque celui-ci est en service.

Pendant le fonctionnement du réacteur, il est nécessaire d'effectuer des mesures de flux neutronique à l'intérieur du coeur du réacteur, à différents emplacements répartis suivant sa section et suivant sa hauteur.

Les assemblages combustibles comportent une ossature comprenant des tubes-guides disposés suivant la direction longitudinale de l'assemblage et qui sont placés dans le coeur, dans une disposition verticale. Les mesures de flux neutronique sont réalisées grâce à des conduits de mesure qui sont introduits dans des tubes-guides de certains assemblages. Les conduits de mesure sont constitués soit par des doigts de gant fermés à l'une de leurs extrémités qui est introduite dans le coeur du réacteur et dans lesquels peuvent être déplacées des sondes mobiles soit par des cannes de mesure dans lesquelles sont fixés des détecteurs de flux neutronique dans des positions déterminées suivant la longueur de la canne.

Dans tous les cas, le conduit de mesure comporte une partie d'extrémité qui peut être introduite dans le coeur et une seconde partie d'extrémité opposée qui pénètre dans un local de mesure disposé au voisinage de la cuve du réacteur. Les conduits de mesure sont montés glissants dans les tube d'instrumentation et peuvent être extraits ou mis en place par simple traction ou poussée sur leur extrémité, depuis le local de mesure.

Il est en effet nécessaire d'extraire les conduits de mesure des assemblages combustibles du coeur, par exemple lorsqu'on effectue le rechargement du coeur du réacteur.

En outre, les conduits de mesure doivent pénétrer dans la cuve du réacteur, par des passages de traversée étanches auxquels sont reliés des tubes de guidage des conduits de mesure de grande longueur joignant la cuve au local de mesure.

Dans un mode de réalisation connu et utilisé couramment sur les réacteurs nucléaires à eau sous pression, les passages de traversée des conduits de mesure sont constitués par des piquages prévus sur le fond bombé de la cuve. Les tubes de guidage de l'instrumentation reliés à ces piquages ont un trajet ayant la forme d'un arc de cercle de grand rayon de courbure joignant le fond de cuve au local de mesure.

La réalisation de piquages dans le fond bombé de la cuve complique la fabrication de ce composant et entraîne des difficultés en ce qui concerne le respect des normes de sécurité.

De plus, la structure du bâtiment du réacteur doit être prévue pour permettre le passage des tubes de guidage d'instrumentation de grande longueur suivant un parcours en arc de cercle. De ce fait, la conception et la réalisation du bâtiment du réacteur sont rendues plus difficiles.

En outre, les piquages traversant le fond de cuve sont très difficilement accessibles, ce qui complique les opérations de contrôle de ces piquages pour assurer un fonctionnement du réacteur en toute sécurité.

Enfin, les tubes de guidage de l'instrumentation reliés au fond de cuve sont constamment remplis d'eau de refroidissement du coeur, si bien que cette eau peut pénétrer dans le local de mesure dans le cas d'un défaut d'étanchéité du tube de guidage.

On a également proposé et utilisé un dispositif d'instrumentation dans lequel les conduits de mesure traversent le couvercle de cuve de manière étanche. On évite ainsi les inconvénients liés à la nécessité de prévoir des piquages dans le fond de cuve et une structure complexe du bâtiment réacteur pour permettre le passage des tube de guidage d'instrumentation vers le local de mesure. Cependant, dans une telle disposition, une partie du dispositif d'instrumentation est portée directement par le couvercle, ce qui complique les opérations de démontage de ce couvercle ainsi que les opérations de manutention et de stockage de l'instrumentation liées au couvercle pendant les arrêts du réacteur.

Dans le brevet FR-A-2.065.512, on décrit un dispositif d'instrumentation du coeur d'un réacteur nucléaire dans lequel les conduits de mesure traversent le couvercle de la cuve.

Le dispositif d'instrumentation comporte des tubes de guidage pouvant recevoir des détecteurs neutroniques en position fixe ou des éléments de détection mobiles à l'intérieur des tubes correspondants. Les tubes de guidage traversent le couvercle de cuve à l'intérieur de colonnes puis sont répartis suivant la section du coeur par des bras supports en forme de poutres disposés sous le couvercle de la cuve qui permettent de diriger chacun des tubes directeurs vers un tube-guide d'un assemblage combustible du coeur destiné à le recevoir.

Pour effectuer le rechargement du coeur, après dépressurisation de la cuve, on démonte les dispositifs permettant la traversée étanche des colonnes d'instrumentation, puis le couvercle de cuve pour permettre un accès aux bras supports et aux tubes directeurs.

On effectue l'extraction des bras supports portant chacun une pluralité de tubes de guidage indépendamment les uns des autres, à l'aide d'un outillage spécial, de façon à préserver la forme et la répartition de ces conduits. Ceci entraîne de nombreuses manipulations nécessitant des outillages spéciaux ; les temps d'intervention sont donc très longs, ce qui augmente la durée de la période d'arrêt du réacteur.

En outre, afin d'éviter d'avoir un nombre élevé de bras de support de forme complexe, on limite le nombre d'assemblages dans lesquels on peut introduire un dispositif de mesure de flux neutronique, aux dépens de la précision d'établissement de la carte du flux dans le coeur.

Les réacteurs nucléaires refroidis par de l'eau sous pression comportent, disposés au-dessus du coeur, une structure appelée équipements internes supérieurs qui est constituée principalement par deux plaques horizontales reliées par des entretoises verticales dont l'une reposant sur la partie supérieure des assemblages combustibles constitue la plaque supérieure de coeur. L'autre plaque, appelée plaque de support, disposée au-dessus de la plaque supérieure de coeur avec un certain écartement assuré par les entretoises, vient se loger à l'intérieur de la cuve, dans un embrèvement où elle se trouve fixée et bloquée en position lors de la fermeture du couvercle.

Les équipements internes supérieurs supportent, en outre, des colonnes verticales constituant des tubes de guidage des barres de commande du réacteur.

Lors d'un arrêt du réacteur pour rechargement et entretien, les équipements internes supérieurs du réacteur peuvent être extraits et disposés sur un stand de stockage dans la piscine du réacteur.

Dans le cas d'un dispositif d'instrumentation du coeur comportant des tubes de guidage ou conduits de mesure traversant le couvercle, les dispositions connues de l'art antérieur ne permettent pas d'effectuer la manutention des équipements internes supérieurs, de façon simple et rapide pendant un arrêt du réacteur pour rechargement.

Les avantages obtenus quant à la conception et à la réalisation du réacteur, lorsque l'instrumentation du coeur traverse le couvercle de cuve s'accompagnent donc d'inconvénients très importants en ce qui concerne l'exploitation et l'entretien du réacteur.

Pour cette raison, la majorité des réacteurs nucléaires actuellement en service comportent des tubes d'instrumentation traversant le fond de cuve.

Le but de l'invention est donc de proposer un dispositif d'instrumentation du coeur d'un réacteur nucléaire à eau sous pression comportant une cuve de forme globalement cylindrique disposée verticalement et fermée à sa partie supérieure par un couvercle amovible, un coeur constitué par des assemblages combustibles juxtaposés placé verticalement à l'intérieur de la cuve, une structure disposée au-dessus du coeur appelée équipements internes supérieurs, comportant une plaque supérieure de coeur reposant sur les assemblages et une plaque de support disposée au-dessus de la plaque de coeur, horizontales et reliées entre elles par des entretoises verticales et un ensemble d'éléments tubulaires de traversée du couvercle, le dispositif d'instrumentation comportant une pluralité de conduits de mesure dans lesquels on peut mettre en place des détecteurs de flux neutronique, traversant le couvercle et pénétrant chacun dans un tube de guidage d'un assemblage combustible, ce dispositif d'instrumentation permettant d'obtenir à la fois une répartition satisfaisante d'un grand nombre de conduits de mesure dans le coeur du réacteur et une grande facilité d'extraction et de mise en place de ces conduits de mesure dans le coeur du réacteur.

Dans ce but, le dispositif d'instrumentation suivant l'invention comporte de plus, entre le couvercle de cuve et la plaque support, une plaque de répartition et de guidage des conduits de mesure fixée sur la plaque support dans une disposition parallèle et au-dessus de cette plaque, par l'intermédiaire de plots verticaux fixés sur la plaque support à la partie supérieure desquels la plaque de répartition est reliée de manière amovible, la plaque de répartition étant traversée par des ouvertures de passage pour des éléments de positionnement verticaux portés par la plaque support, et recevant des colonnes d'instrumentation verticales dans des positions correspondant aux positions des éléments tubulaires de traversée du couvercle et des moyens d'accrochage sur sa face supérieure et étant solidaire sur sa face inférieure dirigée vers la plaque support d'une pluralité de tubes de guidage verticaux dans des positions correspondant à celles d'entretoises tubulaires des équipements internes supérieurs dans lesquelles les tubes de guidage peuvent être engagés, chacun de ces tubes recevant au moins un conduit de mesure provenant d'une colonne d'instrumentation pour son guidage à travers les équipements internes supérieurs, depuis la plaque de répartition jusqu'à l'entrée d'un tube d'instrumentation d'un assemblage combustible.

L'invention est également relative à un procédé et à un dispositif d'extraction et de mise en place du dispositif d'instrumentation, pendant l'entretien du réacteur.

Afin de bien faire comprendre l'invention, on va maintenant décrire, à titre d'exemple non limitatif, en se référant aux figures jointes en annexe, un mode de réalisation d'un dispositif d'instrumentation suivant l'invention ainsi qu'un dispositif de manutention de cet ensemble d'instrumentation.

La figure 1 est une vue en coupe par un plan vertical de la cuve d'un réacteur nucléaire équipée d'un dispositif d'instrumentation suivant l'invention.

La figure 2 est une vue à plus grande échelle de la partie supérieure de la cuve représentée sur la figure 1 comportant le dispositif d'instrumentation.

La figure 3 est une vue en coupe par un plan vertical de la partie supérieure d'une colonne d'instrumentation, au-dessus du couvercle de la cuve.

La figure 4 est une vue en coupe par un plan vertical d'un passage de traversée d'un conduit de mesure dans les équipements internes du réacteur.

La figure 5 est une vue en coupe et en élévation de l'ensemble de répartition et de guidage des conduits de mesure du dispositif d'instrumentation suivant l'invention.

La figure 6 est une vue en coupe et en élévation des moyens de positionnement et d'accrochage de la plaque de répartition du dispositif d'instrumentation suivant l'invention.

La figure 7 est une vue en élévation du dispositif de manutention des équipements internes et du dispositif d'instrumentation d'un réacteur nucléaire.

La figure 8 est une vue de dessus suivant 8 de la figure 7, du dispositif de manutention.

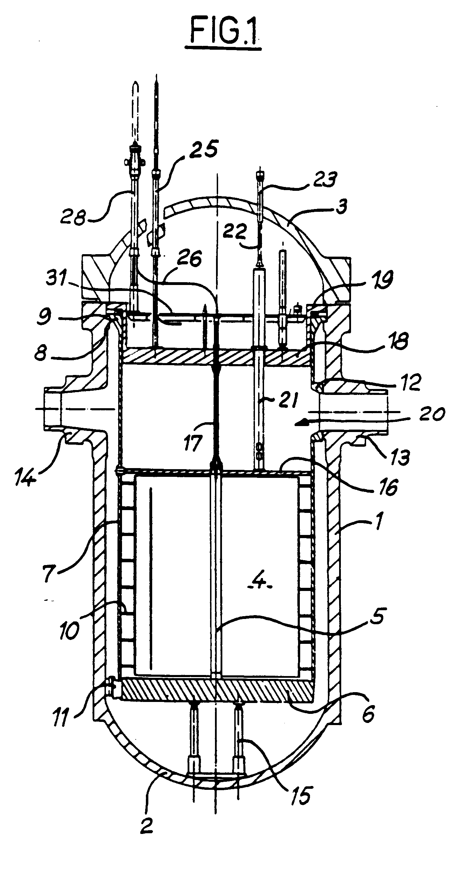

Sur la figure 1, on voit la cuve 1 d'un réacteur nucléaire à eau sous pression de forme générale cylindrique et fermée à sa partie inférieure par un fond bombé 2.

La partie supérieure de la cuve est fermée par un couvercle amovible 3 également de forme bombée.

Le coeur du réacteur 4 constitué par des assemblages combustibles 5 de forme prismatique disposés verticalement et juxtaposés repose sur une plaque inférieure de coeur 6 fixée à la partie inférieure d'une enveloppe de coeur cylindrique 7. L'enveloppe de coeur 7 repose par sa partie supérieure 8 constituant une bride, sur un rebord délimitant un embrèvement 9 usiné à la partie interne de la cuve 1. A l'intérieur de l'enveloppe de coeur 7 est fixé le cloisonnement 10 du coeur qui constitue avec l'enveloppe 7 les équipements internes inférieurs du réacteur nucléaire. Les équipements internes inférieurs sont maintenus radialement à l'intérieur de la cuve 1, au niveau de la plaque inférieure 6, par des dispositifs tels que 11. Ces dispositifs permettent une mise en place des équipements internes inférieurs de façon que les tubulures de sortie 12 des équipements internes se trouvent dans le prolongement des tubulures de sortie 13 de la cuve 1.

La cuve 1 comporte également des tubulures d'entrée 14 par lesquelles l'eau sous pression de refroidissement du réacteur pénètre dans la cuve 1. Après traversée du coeur 4 dans la direction verticale, l'eau primaire de refroidissement sort de la cuve par les tubulures 13.

Des dispositifs de support 15 en appui sur le fond 2 de la cuve permettent de maintenir le coeur du réacteur dans le cas d'un enfoncement accidentel de ce coeur à l'intérieur de la cuve.

Au-dessus du coeur 4, est placée, dans une position horizontale, une plaque supérieure de coeur 16 en appui sur la partie supérieure des assemblages combustibles 5. Cette plaque 16 est reliée par l'intermédiaire d'entretoises verticales telles que 17 à une plaque support 18 de forte épaisseur également placée dans une disposition horizontale et avec un certain espacement par rapport à la plaque 16.

La plaque 18 comporte une bride supérieure 19 venant se loger dans l'embrèvement 9 de la cuve au-dessus de la bride 8 de l'enveloppe de coeur 7. Le couvercle de cuve 3 vient reposer sur la bride 19 pour assurer le maintien et le blocage de la plaque support 9 et des éléments fixés sur cette plaque support.

La plaque 18 et l'ensemble des éléments qui lui sont reliés constituent les équipements internes supérieurs 20 du réacteur disposés au-dessus du coeur 4.

En plus de la plaque supérieure de coeur 16 et des entretoises 17, les équipements internes supérieurs comportent les tubes de guidage 21 des barres de commande 22 du réacteur qui traversent le couvercle 3 par l'intermédiaire de tubes adaptateurs 23 et des tubes de passage de thermocouples 24 traversant le couvercle de cuve à l'intérieur de tubes adaptateurs 25.

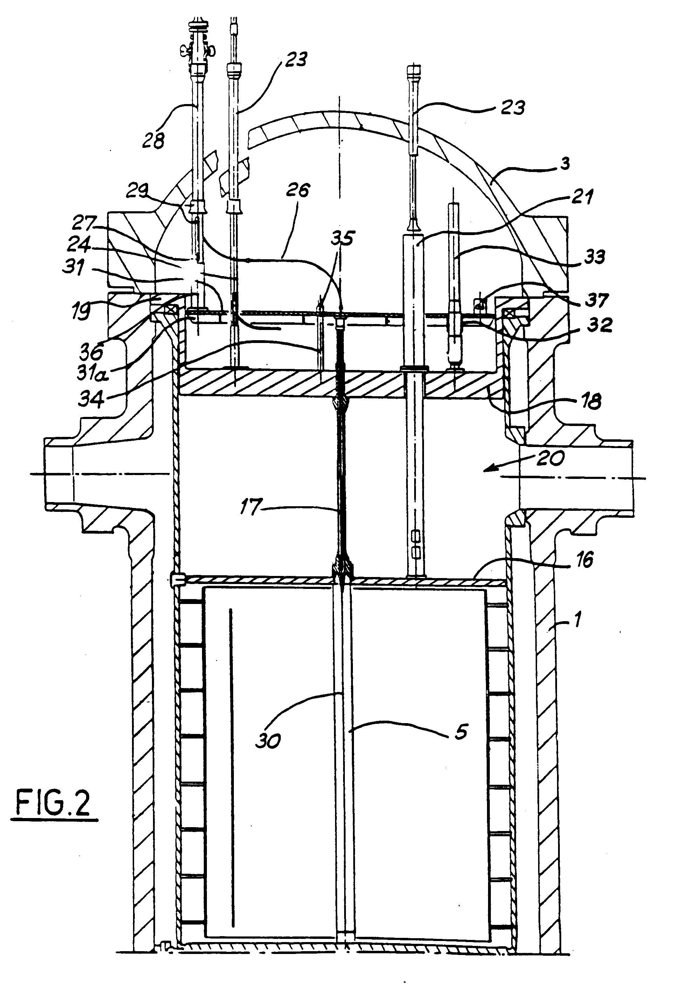

La plaque support 18 assure également la fixation et le positionnement du dispositif d'instrumentation suivant l'invention qui sera décrit de manière générale en se référant aux figures 1 et 2.

Le dispositif d'instrumentation comporte un ensemble du conduits de mesure tels que 26 qui traversent le couvercle de la cuve 3 par l'intermédiaire de colonnes d'instrumentation 27 montées étanches dans des adaptateurs 28 traversant le couvercle de cuve 3.

Chacun des conduits de mesure 26 qui peut être constitué soit par un doigt de gant dans lequel se déplace une sonde mobile, soit par une canne de mesure dans laquelle sont placées des sondes en position fixe est dirigé vers une entretoise tubulaire 17 des équipements internes supérieurs qui assure le guidage du conduit 26 vers un tube-guide 30 d'un assemblage 5 du coeur.

La répartition des conduits 26 provenant d'une colonne d'instrumentation 27, suivant la section du coeur, de façon à diriger ces conduits 26 vers l'entrée des entretoises tubulaires 17 correspondantes des équipements internes supérieurs est assurée par une plaque de répartition 31 de forme circulaire dont le diamètre est très légèrement inférieur au diamètre de la plaque support 18 des équipements internes supérieurs 20.

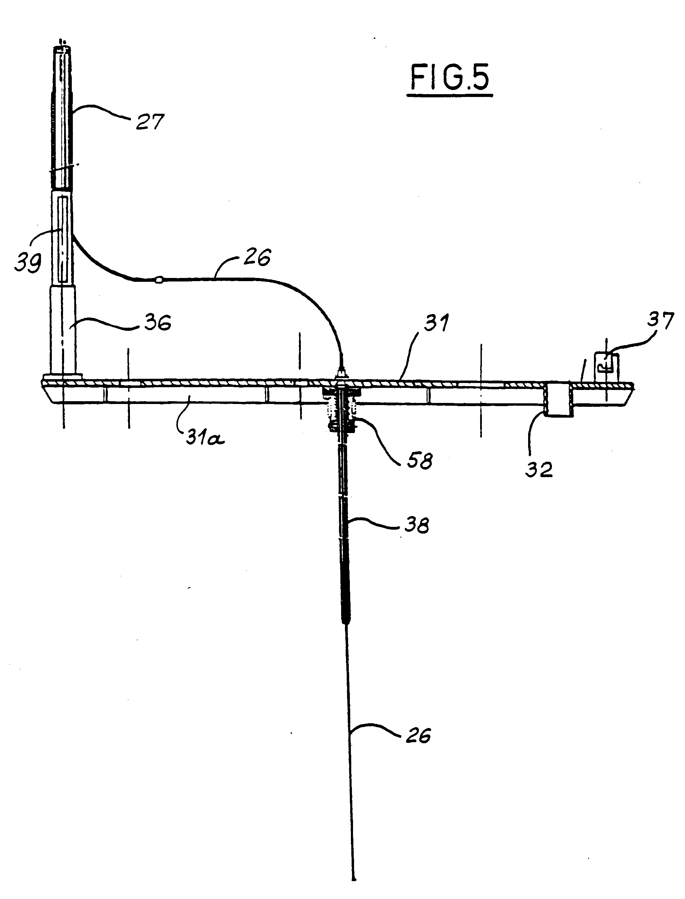

La plaque de répartition 31 qui est également visible sur la figure 5 est constituée par une plaque d'acier renforcée par des nervures entrecroisées 31a. La plaque de répartition 31 est traversée par un réseau d'ouvertures permettant le passage des tubes de guidage 21 des barres de commande 22 et des colonnes de thermocouple 24 fixés sur les équipements internes supérieurs.

La plaque 31 comporte de plus des ouvertures au niveau desquelles sont fixées des douilles de guidage 32 qui sont engagées, lorsque la plaque de répartition 31 est en position dans la cuve, comme représenté sur les figures 1 et 2, sur des colonnes de guidage et de positionnement verticales 33 fixées sur la plaque de support 18.

Lors de sa mise en place dans la cuve, la plaque 31 guidée par les colonnes 33 vient reposer sur la partie supérieure de plots 34 comportant un épaulement d'appui et une partie filetée traversant la plaque 31 au niveau d'une ouverture dont le diamètre est inférieur au diamètre de l'épaulement d'appui. Un écrou 35 permet de fixer la plaque 31 au niveau du plot 34. Les écrous 35 de fixation de la plaque 31 sont autoverrouillables et assurent une fixation rigide de la plaque 31.

La plaque 31 porte sur sa surface supérieure des douilles verticales 36 servant d'embase aux colonnes d'instrumentation 27 dans lesquelles passent les conduits 26.

La plaque de répartition 31 porte également sur sa surface supérieure des moyens d'accrochage 37 qui seront décrits plus loin.

Enfin, comme il est visible sur la figure 5, la plaque 31 porte sur sa face inférieure dirigée vers la plaque support 18 des tubes de guidage verticaux ou perches tels que 38 dans chacun desquels est engagé un conduit de mesure 26. Chacun des tubes de guidage 38 est introduit, lorsque le dispositif d'instrumentation est mis en place dans la cuve, comme représenté sur les figures 1 et 2, dans une entretoise tubulaire 17 des équipements internes supérieurs.

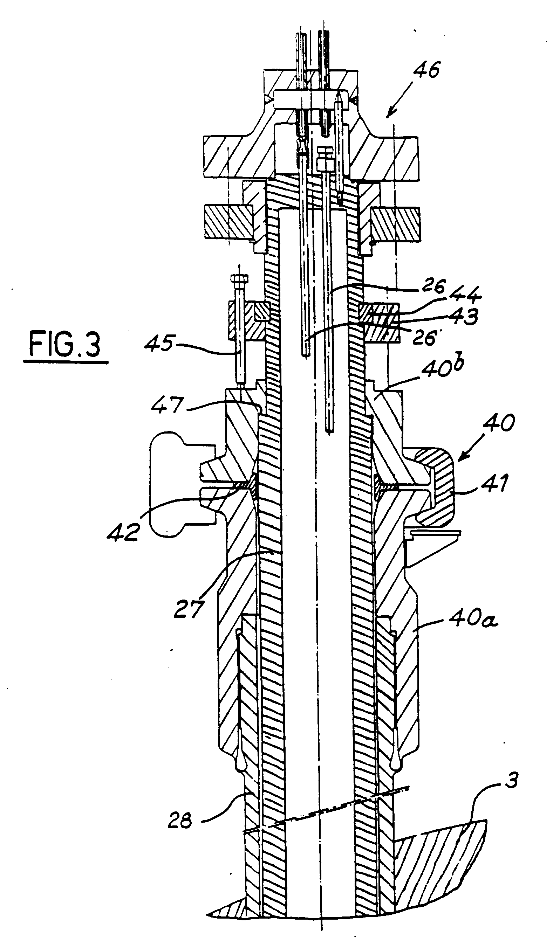

On va maintenant se reporter à la figure 3, pour décrire plus en détail une colonne d'instrumentation 27 et le montage étanche de cette colonne d'instrumentation 27, à l'intérieur de l'adaptateur 28 correspondant de traversée du couvercle 3.

Comme il est visible sur les figures 1 et 2, la partie inférieure de chacune des colonnes d'instrumentation 27 est montée dans l'embase 36 correspondante solidaire de la face supérieure de la plaque de répartition 31. Au-dessus de l'embase 36, la colonne d'instrumentation 27 comporte des lumières 39 permettant le passage des conduits de mesure 26 associés à cette colonne d'instrumentation 27.

Dans un mode de réalisation préférentiel, le dispositif d'instrumentation du coeur du réacteur nucléaire à eau sous pression comporte six colonnes d'instrumentation telles que 27 passant dans des adaptateurs correspondants 28 traversant le couvercle de cuve. Deux de ces colonnes permettent le passage de cannes de mesure renfermant des sondes en position fixe et les quatre autres colonnes permettent le passage de doigts de gant renfermant des sondes mobiles.

Sur la figure 3, on voit la partie supérieure d'un tube adaptateur 28, au-dessus de couvercle 3 de la cuve, permettant la sortie étanche d'une colonne d'instrumentation 27 qui est engagée à sa partie inférieure dans une embase 36 solidaire de la plaque de répartition 31.

La colonne d'instrumentation 27 de forme tubulaire permet le passage à l'intérieur de la cuve, à travers le couvercle, d'un ensemble de conduits de mesure 26 disposés dans l'espace interne de la colonne 27.

La colonne 27 est fixée de manière étanche à l'intérieur du prolongateur 28, par l'intermédiaire d'un ensemble d'étanchéité 40 comportant une manchette inférieure 40a et une manchette supérieure 40b. Les deux manchettes portent parties coniques sur lesquelles viennent en appui les faces internes d'une bague 41 assurant l'assemblage des manchettes 40a et 40b.

Un joint intérieur 42 en matériau métallique assure l'étanchéité entre les deux manchettes 40a et 40b.

Un anneau 43 est fixé par l'intermédiaire d'un élément de clavetage 44 sur une partie de la colonne tubulaire 27 saillante au-dessus de la manchette 40b. Des vis 45 engagées dans l'anneau 43 viennent en appui par leur partie inférieure sur la partie supérieure de la manchette 40b de façon à assurer un léger soulèvement de la colonne tubulaire 27 dont la partie inférieure est simplement engagée dans l'embase 36. Ce soulèvement provoque une mise en contact étanche grâce à un joint d'un épaulement 47 usiné sur la surface extérieure de la colonne tubulaire 27 avec un épaulement correspondant de la manchette 40b.

La partie supérieure de la colonne tubulaire 27 est fermée par un fond traversé par des ouvertures de passage des conduits de mesure 26.

Un dispositif de connexion 46 fixé à la partie supérieure de la colonne 27 permet le raccordement des extrémités de conduits de mesure traversant le fond supérieur de la colonne tubulaire 27 avec des tronçons de ces conduits de mesure assurant la liaison avec le local d'instrumentation.

Dans un mode de réalisation préférentiel, on dispose dans chacune des colonnes tubulaires d'instrumentation dix sept conduits de mesure qui ressortent à la base de la colonne d'instrumentation par les lumières 39 et sont répartis dans des tubes d'instrumentation des assemblages du coeur par la plaque de répartition 31.

Sur la figure 2, on voit le trajet d'un conduit de mesure particulier entre la colonne d'instrumentation 27 et la face supérieure de la plaque de répartition.

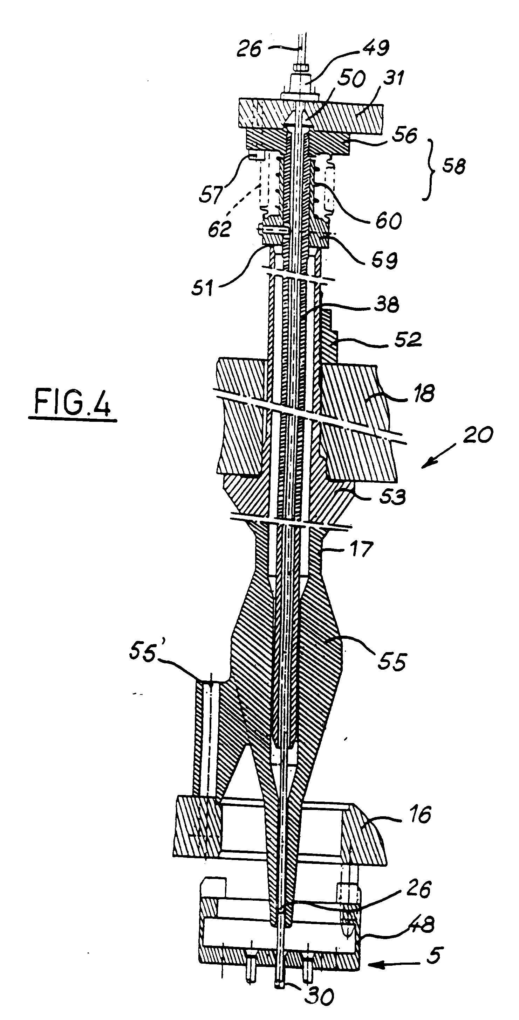

Sur la figure 4, on a représenté la partie d'un conduit de mesure 26 traversant la plaque de répartition 31 et les équipements internes 20, dans une direction verticale, pour parvenir dans un tube-guide d'instrumentation 30 d'un assemblage combustible 5 dont l'embout supérieur 48 a été représenté sur la figure 4.

Le conduit de mesure 26 est fixé sur la face supérieur de la plaque de répartition 31, par l'intermédiaire d'un raccord étanche 49 disposé dans le prolongement d'une ouverture 50 traversant la plaque 31.

Le conduit 26 traverse la plaque de répartition à l'intérieur de l'ouverture 50 puis les internes supérieurs dans la direction verticale, à l'intérieur du tube de guidage 38 lui-même disposé à l'intérieur d'une entretoise tubulaire 17 traversant les plaques 18 et 16 et fixée sur ces plaques au niveau des ouvertures de traversée.

La colonne 17 comporte un épanouissement 53 venant en appui sur la face inférieure de la plaque de support 18 et une partie filetée sur laquelle est engagé un écrou de serrage 52 permettant la fixation de l'entretoise 17 sur la plaque 18.

On notera toutefois que certaines entretoises ne comportent ni épanouissement 53 ni écrou 52, de manière à permettre une possibilité de dilatation axiale de l'entretoise concernée.

L'entretoise 17 comporte également une embase 55 profilée qui est engagée dans une ouverture de la plaque supérieure de coeur 16 disposée à l'aplomb de l'assemblage combustible 5. Cette embase profilée comporte des épanouissements radiaux percés de trous de vis 55′ situés dans le prolongement de trous de fixation dans la plaque supérieure 16, pour sa fixation.

Comme il a été indiqué plus haut, la plaque de répartition 31 porte, sur sa surface inférieure, dans le prolongement de l'ouverture 50 de passage du conduit de mesure 26 tranversant la plaque 31, un tube de guidage 38 vertical dont le diamètre est inférieur au diamètre intérieur de l'entretoise tubulaire 17. Le tube de guidage 38 est fixé à sa partie supérieure sous la plaque de répartition 31, par l'intermédiaire d'une plaquette de fixation 56 et de vis 57.

La plaquette de fixation 56 assure le support d'un ensemble d'étanchéité 58 entourant l'extrémité supérieure du tube de guidage 38. Cet ensemble d'étanchéité 58 comporte un clapet 59 monté coulissant autour de la partie d'extrémité supérieure du tube de guidage 38, rappelé en position basse par un ressort hélicoïdal 60 et relié à la face inférieure de la plaquette 56 par un soufflet 62.

Le clapet 59 vient en contact avec l'extrémité supérieure 51 de l'entretoise tubulaire 17 dont il assure la fermeture étanche, lorsque le tube de guidage 38 est engagé à l'intérieur de l'entretoise tubulaire 17 comme représenté sur la figure 4.

Cette fermeture étanche de l'extrémité 51 de l'entretoise tubulaire 17 évite une circulation parasite d'eau de refroidissement du réacteur le long du tube de guidage 38, pendant le fonctionnement du réacteur. Une telle circulation parasite serait en effet susceptible d'engendrer des vibrations entraînant une usure rapide des conduits de mesure 26.

Une variante de l'invention consiste à utiliser une entretoise 17 d'un diamètre intérieur suffisamment important pour recevoir plusieurs tubes de guidage 38 et dont l'embase 55 est pourvue de guides de façon à introduire dans le tube d'instrumentation et les tubes-guides d'un même assemblage 5 plusieurs sondes ou détecteurs.

Sur la figure 5, on a représenté la partie du dispositif d'instrumentation susceptible d'être déplacée verticalement à l'intérieur des équipements internes supérieurs, grâce à l'outillage qui sera décrit plus loin.

Ce déplacement vertical de la partie représentée du dispositif d'instrumentation peut être effectué sur une hauteur totale de l'ordre de quatre mètres, ce qui permet d'extraire entièrement les conduits de mesure 26 des tubes d'instrumentation 30 des assemblages combustibles.

Cette opération est effectuée lors d'un arrêt du réacteur, après refroidissement et dépressurisation du circuit primaire et de la cuve du réacteur et après démontage et soulèvement du couvercle de cuve 3.

La partie supérieure de la plaque de répartition 31 est alors accessible sous une hauteur d'eau de la piscine du réacteur nucléaire suffisante pour assurer la protection biologique des opérateurs.

La fixation de la plaque de répartition 31 sur la plaque support 18 est généralement réalisée par l'intermédiaire de six plots 34 auxquels sont associés six dispositifs de fixation amovibles 35. Ces dispositifs de fixation amovibles sont démontés les uns après les autres pour séparer la plaque de répartition 31 de la plaque support 19.

Les dispositifs amovibles de fixation 35 placés à l'extrémité supérieure des plots 34 de fixation de la plaque de répartition 31 sont démontés en utilisant une clé de grande longueur comportant une tige de déverrouillage des écrous à sa partie centrale.

La plaque de répartition 31 et les éléments qui sont reliés à cette plaque telle que représentée sur la figure 5 peuvent alors être déplacés dans la direction verticale et vers le haut par rapport aux équipements internes supérieurs, cette plaque étant simplement engagée sur des éléments verticaux tels que les éléments de positionnement 33 et les douilles de guidage 32 solidaires de la plaque 31.

Avant d'effectuer le démontage du couvercle, les dispositifs d'étanchéité des adaptateurs tels que les adaptateurs 28 sont démontés, ce qui permet de séparer les colonnes d'instrumentation 27 de ces adaptateurs 28 et du couvercle 3.

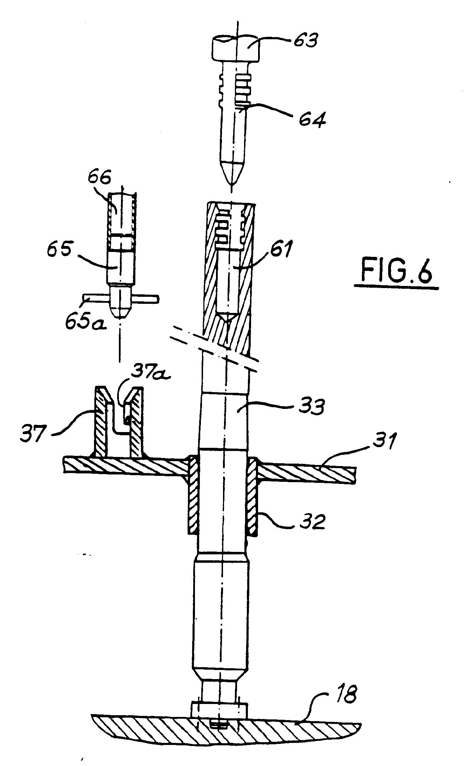

Sur la figure 6, on a représenté un élément de guidage et de positionnement fixé dans une position verticale sur la plaque de support 18 et engagé dans une douille 32 solidaire de la plaque de répartition 31 au niveau d'une ouverture de traversée prévue dans une position correspondante.

L'élément de guidage 33 comporte à sa partie supérieure un alésage 61 de direction axiale usiné pour constituer plusieurs gorges successives partielles suivant sa périphérie.

Cet alésage permet d'assembler une colonne de guidage 63 à l'extrémité supérieure de l'élément de guidage 33, grâce à un moyen de liaison constitué par un axe 64 comportant des nervures périphériques partielles dont la disposition et la forme correspondent aux gorges partielles de l'alésage 61.

L'assemblage de la colonne 63 peut être réalisé par introduction de l'axe 64 dans l'alésage 61 suivant une certaine orientation, puis par rotation d'une fraction de tour de la colonne 63 autour de son axe commun avec l'axe de l'alésage 61 et de l'élément 33. La colonne 63 dont le diamètre extérieur est identique au diamètre extérieur de l'élément 33 est alors fixée à l'extrémité de cet élément 33 et dans son prolongement, pour assurer une continuité de guidage des douilles 32 et de la plaque 31.

On a également représenté sur la figure 6 un moyen d'accrochage 37 permettant la soulèvement de la plaque de répartition 31 dans la direction verticale.

Le dispositif 37 est constitué par une pièce tubulaire comportant deux échancrures profilées telles que 37a dans sa paroi latérale.

Ces échancrures 37a permettent de relier à distance l'extrémité inférieure d'accrochage 65 d'une tige de levage 66 à la douille 37 et à la plaque 31.

Pour cela, l'axe transversal 65a de la partie 65 est introduite par déplacement vertical, dans les échancrures 37a, puis on fait subir une rotation autour de son axe à la tige 66 pour réaliser un accrochage de la partie 65, 65a de cette tige sur la douille 37, par un système du type à baïonnette.

Les colonnes de guidage 63 et les tiges de levage 66 sont associées aux dispositifs de levage et de manutention des équipements internes supérieurs du réacteur et permettent de réaliser préalablement à l'extraction des équipements internes supérieurs dans la cuve du réacteur, le levage du dispositif d'instrumentation et l'extraction des conduits de mesure des tubes guides des assemblages.

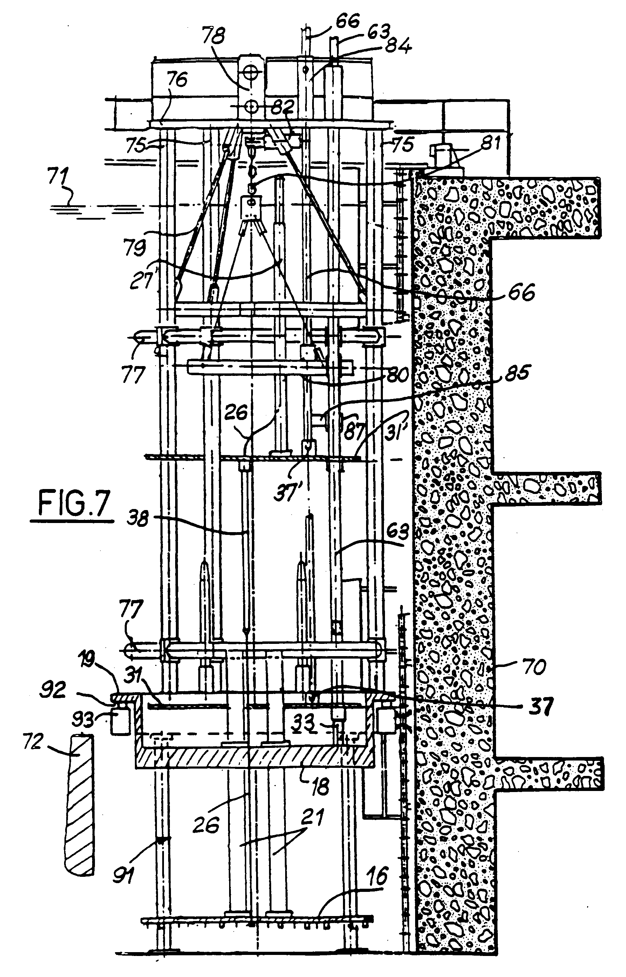

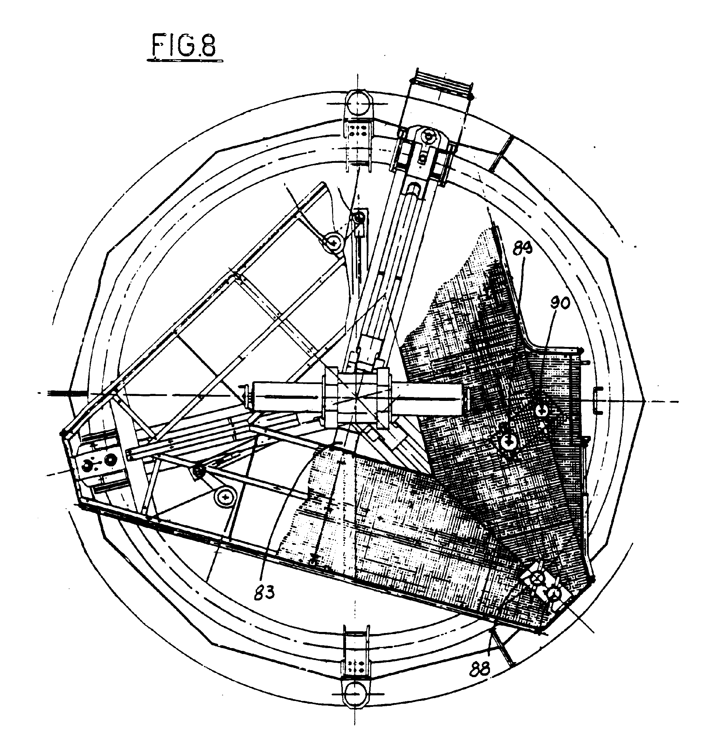

Sur les figures 7 et 8 on a représenté le dispositif de levage et de manutention des équipements internes supérieurs du réacteur équipé des moyens nécessaires pour effectuer le levage et la manutention du dispositif d'instrumentation suivant l'invention.

Sur la figure 7, le dispositif de manutention des équipements internes supérieurs a été représenté dans la position qu'il occupe à l'intérieur de la piscine du réacteur, au moment de la dépose des équipements internes supérieurs du réacteur sur leur stand de stockage.

Sur cette figure, on voit la paroi 70 de la piscine du réacteur qui est remplie d'eau jusqu'au niveau 71 pendant la phase représentée correspondant à la dépose des équipements internes supérieurs sur le stand de stockage qui est séparé de la cuve du réacteur par une paroi verticale 72 appelée surbau.

Le dispositif de manutention des équipements internes supérieurs est constitué de manière habituelle par une structure comportant trois colonnes verticales 75 portant à leur partie supérieure une plateforme 76 et reliées avec un certain espacement dans la direction verticale, à deux structures d'entretoisement 77.

Chacune des colonnes 75 comporte, à sa partie inférieure, un dispositif non représenté de liaison à la plaque de support 18 des équipements internes supérieurs.

Comme il est visible sur les figures 7 et 8, un anneau de levage 78 sur lequel peut être engagé le crochet du pont de la centrale est disposé au-dessus de la plateforme 76 et relié aux colonnes 75 par l'intermédiaire d'un palonnier 79.

Sur la figure 7, la plaque de répartition 31 de l'instrumentation a été représentée dans une première position par rapport aux équipements internes supérieurs correspondant à sa position de service représentée sur les figures 1 et 2 et dans une seconde position 31' qui correspond à une position haute à l'intérieur des équipements internes supérieurs du réacteur, de l'ensemble mobile du dispositif d'instrumentation tel que représenté sur la figure 5.

La distance verticale entre ces deux positions 31 et 31' de la plaque de répartition correspond sensiblement à la hauteur du coeur du réacteur, c'est-à-dire, dans la plupart des cas, à une distance voisine de quatre mètres.

Les moyens de levage et de guidage de la plaque de répartition 31 qui sont représentés sur la figure 6 sont associés aux dispositifs de levage des équipements internes supérieurs représentés sur la figure 7.

Les trois tiges de levage 66 qui peuvent être reliées chacune à un dispositif d'accrochage 37 de la plaque de répartition 31 sont reliées à un palonnier 80 lui-même relié à la chaîne 81 d'un treuil 82 fixé à l'anneau de levage 78 sous la plateforme 76. Le treuil 82 comporte en particulier un motoréducteur 83 visible sur la figure 8, qui permet de lever ou d'abaisser le palonnier 80 et les tiges 66 qui sont reliées à ce palonnier, sur une hauteur d'à peu près quatre mètres correspondant à la hauteur de déplacement de la plaque de répartition 31.

Les tiges 66 sont guidées par des fourreaux 84 à un niveau supérieur à celui de la plateforme 76.

Lorsque la plaque 31 est dans sa position haute 31', la partie supérieure des tiges 66 est saillante sur une hauteur de quatre mètres par rapport à la partie supérieure des fourreaux 84.

Les colonnes de guidage 63 de la plaque de répartition 31 sur lesquelles coulissent les fourreaux 32 peuvent être reliées, à leur partie inférieure, aux colonnes de guidage et de positionnement 33, comme il a été décrit en se référant à la figure 6. Les colonnes de guidage 63 sont maintenues transversalement par les éléments d'entretoisement 77 de l'ensemble de levage des équipements internes supérieurs et assurent à la fois le guidage de la plaque 31 par l'intermédiaire des douilles 32 et des tiges de levage par l'intermédiaire de bras 85 portant chacun un fourreau de guidage 87 à son extrémité.

Comme il est visible sur la figure 8, des moyens d'actionnement des moyens d'accrochage et de guidage du dispositif représenté sur la figure 7 sont accessibles depuis la plateforme supérieure 76.

Ces dispositifs constitués par des poignées de manoeuvre comportent en particulier les dispositifs 88 de verrouillage des moyens de liaison des colonnes 75 et de la plaque de support 18 des équipements internes supérieurs, le dispositif de manoeuvre 89 des mécanismes de verrouillage 64 des colonnes de guidage 63 sur les moyens de positionnement 33 ainsi que les dispositifs de verrouillage 90 des tiges de levage 66 sur les moyens d'accrochage 37 de la plaque 31.

On va maintenant décrire, en se référant à l'ensemble des figures, une opération de manutention du dispositif d'instrumentation suivant l'invention et des équipements internes supérieurs du réacteur pour les faire passer de la cuve du réacteur à leur stand de stockage représenté sur la figure 7.

Le réacteur nucléaire est mis en arrêt à froid et les dispositifs de traversée étanche du couvercle sont désaccouplés.

En ce qui concerne les colonnes d'instrumentation 27, les dispositifs de couplage 46 des conduits de mesure 26 sont démontés et les vis 45 de maintien étanche des colonnes sont desserrées puis l'anneau de liaison 41 est démonté.

Après avoir réalisé la séparation des organes traversant le couvercle, on soulève ce couvercle de façon à rendre accessible par le dessus le dispositif d'instrumentation fixé sur la plaque support des équipements internes supérieurs.

Les dispositifs de liaison amovibles 35 de la plaque de répartition 31 et de la plaque support 18 sont démontés et le dispositif de manutention des équipements internes supérieurs représenté sur les figures 7 et 8 est amené au-dessus de la cuve du réacteur puis placé en position de levage sur les équipements internes supérieurs grâce à des éléments de guidage connus de l'art antérieur.

Les dispositifs de verrouillage 88 sont actionnés depuis la plateforme 76, pour permettre une liaison des colonnes 75 et de la bride supérieure 19 de la plaque de support 18.

Les dispositifs 89 sont de même actionnés pour permettre la liaison des colonnes de guidage 63 et des dispositifs 33 traversant la plaque de répartition 31.

De même, les dispositifs 90 sont actionnés pour réaliser la liaison entre les tiges de levage 66 et les moyens d'accrochage 37 de la plaque de répartition 31.

Le treuil 82 est mis en oeuvre de façon à remonter la plaque de répartition 31 sur une hauteur d'à peu près quatre mètres, cette plaque passant de sa position 31 à sa position 31' représentées sur la figure 7.

Le déplacement de la plaque est assuré par le palonnier 80 et par l'intermédiaire des tiges 66, cependant que les colonnes 63 permettent de guider le déplacement vertical de la plaque 31 et des tiges de levage 66.

Le déplacement vertical de l'ensemble mobile du dispositif d'instrumentation représenté sur la figure 5 permet de sortir complètement les conduits de mesure 26 des tubes-guides correspondants 30 des assemblages 5.

Comme il est visible sur la figure 7, dans la position haute 31' de la plaque de répartition 31, l'extrémité inférieure des conduits de mesure 26 qui sont reliés à la plaque 31 et engagés dans les tubes de guidage 38, se trouve au niveau de la plaque supérieure de coeur 16, c'est-à-dire juste au-dessus des embouts supérieurs des assemblages combustibles.

On a alors réalisé la séparation complète du dispositif d'instrumentation suivant l'invention et du coeur du réacteur.

Les conduits de mesure 26 restent engagés dans les colonnes tubulaires de guidage des équipements internes supérieurs et sont ainsi protégés.

On peut effectuer le transport des équipements internes supérieurs et du dispositif d'instrumentation en position haute 31' depuis la cuve du réacteur jusqu'au stand de stockage 91 des équipements internes supérieurs où le rebord extérieur 92 de la bride supérieure 19 de la plaque de support 18 des équipements internes supérieurs vient reposer sur des supports 93.

On peut alors effectuer d'une part le rechargement du coeur du réacteur et d'autre part l'entretien et la réparation des équipements internes supérieurs et/ou du dispositif d'instrumentation suspendu au-dessus des équipements internes supérieurs.

Il est à remarquer que pour passer de la cuve du réacteur au stand de stockage des équipements internes supérieurs, ces équipements internes supérieurs et le dispositif d'instrumentation suivant l'invention doivent être soulevés au maximum lors du franchissement du surbau 72. Le dispositif est prévu pour qu'à ce point le plus haut de leur déplacement, les équipements et le dispositif d'instrumentation soient encore immergés dans l'eau de la piscine du réacteur.

La mise en position haute et le transport du dispositif d'instrumentation avec les équipements internes supérieurs peuvent être effectués sans avoir à démonter les colonnes d'instrumentation 27 qui restent engagées dans les douilles de fixation 36 solidaires de la face supérieure de la plaque de répartition 31.

Lorsque les équipements internes supérieurs sont sur leur stand de stockage, comme représenté sur la figure 7, la partie mobile du dispositif d'instrumentation suivant l'invention étant en position haute, la partie supérieure des colonnes d'instrumentation 27, dans leur position haute 27', reste à un niveau inférieur au niveau supérieur de la piscine.

Le dispositif d'instrumentation suivant l'invention présent l'avantage de permettre un passage des conduits d'instrumentation à travers le couvercle de la cuve tout en évitant les difficultés rencontrées avec les dispositifs suivant l'art antérieur, en ce qui concerne le démontage et la manutention du dispositif d'instrumentation et la manutention des équipements internes supérieurs du réacteur entre la cuve et le stand de stockage de ces équipements internes dans la piscine du réacteur.

Lors de la remise en place des équipements internes supérieurs dans la cuve, par une manoeuvre inverse de celle qui a été décrite plus haut, le dispositif d'instrumentation est en position haute par rapport aux équipements internes supérieurs et les conduits de mesure sont protégés par les colonnes tubulaires de ces équipements internes. Lorsque les équipements internes supérieurs sont remis en place dans la cuve, les colonnes tubulaires de guidage se trouvent dans l'alignement des tubes-guides des assemblages combustibles, si bien que, lors de la descente du dispositif d'instrumentation qui est effectuée par l'intermédiaire des tiges 66, les conduits de mesure 26 viennent s'engager sans difficulté dans les tubes-guides des assemblages instrumentés.

Toutes ces manoeuvres sont obtenus grâce à un dispositif simple intégré au dispositif de manutention des équipements internes supérieurs.

L'ensemble des opérations de démontage et de manutention du dispositif d'instrumentation et des équipements internes supérieurs peut être effectué très facilement et dans un temps très court.

On évite ainsi d'allonger les durées d'arrêt du réacteur pour déchargement et rechargement des assemblages combustibles.

En outre, le dispositif d'instrumentation suivant l'invention permet d'éviter la présence de piquages en fond de cuve et accroît ainsi de manière importante la sûreté du réacteur nucléaire. D'autre part, la structure du bâtiment réacteur peut être simplifiée par le fait qu'aucun passage de tubes de guidage d'instrumentation n'est disposé entre le fond de cuve et le local d'instrumentation du réacteur. En outre, en cas de percement d'un conduit de mesure tel qu'un doigt de gant, pendant les opérations de maintenance, le fluide de refroidissement du réacteur n'est pas amené à s'écouler dans le local d'instrumentation la cuve du réacteur étant dépressurisée.

Enfin, la géométrie de la plaque de répartition permet d'associer des conduits de mesure à un très grand nombre d'assemblages combustibles, ce qui permet d'améliorer la connaissance de la répartition du flux neutronique dans le coeur.

L'invention ne se limite pas au mode de réalisation qui a été décrit.

C'est ainsi qu'on peut réaliser le dispositif suivant l'invention d'une manière un peu différente de celle qui a été décrite, en ce qui concerne ses moyens de guidage, d'accrochage ou de déplacement.

Les tiges de levage de la plaque de répartition pourraient être associées, pour leur déplacement vertical, à des vérins au lieu d'un palonnier suspendu à un treuil.

Les moyens d'étanchéité associés à la plaque de répartition et aux colonnes d'instrumentation peuvent être de tout type.

Enfin, l'invention peut s'appliquer à tout réacteur nucléaire à eau sous pression comportant des équipements internes supérieurs ayant une plaque de support sur laquelle on peut venir placer la plaque de répartition du dispositif d'instrumentation.

Enfin, les moyens de levage du dispositif d'instrumentation associés au dispositif de manutention des équipements internes supérieurs pourraient être utilisés pour effectuer le levage et la manutention de dispositifs associés au réacteur nucléaire et différents de dispositifs d'instrumentation.

## Revendications

1. Dispositif d'instrumentation du coeur d'un réacteur nucléaire à eau sous pression comportant une cuve de forme globalement cylindrique (1) disposée verticalement et fermée à sa partie supérieure par un couvercle (3), un coeur (4) constitué par des assemblages combustibles (5) juxtaposés et placés verticalement à l'intérieur de la cuve (1) du réacteur, une structure (20) disposée au-dessus du coeur, appelée équipements internes supérieurs comportant une plaque supérieure de coeur (16) reposant sur les assemblages (5) et une plaque de support (18) disposée au-dessus de la plaque de coeur (16), horizontales et reliées entre elles par des entretoises verticales (17) et un ensemble d'éléments tubulaires (23, 25, 28) de traversée du couvercle (3), le dispositif d'instrumentation comportant une pluralité de conduits de mesure (26) dans lesquels on peut mettre en place des détecteurs de flux neutronique, traversant le couvercle et pénétrant chacun dans un tube d'instrumentation (30) d'un assemblage combustible (5), caractérisé par le fait que le dispositif d'instrumentation comporte de plus, entre le couvercle de cuve (3) et la plaque support (18), une plaque de répartition et de guidage (31) des conduits de mesure (26) fixée sur la plaque support (18) dans une disposition parallèle et au-dessus de cette plaque (18), par l'intermédiaire de plots verticaux (34) fixés sur la plaque support (18) à la partie supérieure desquels la plaque de répartition (31) est reliée de manière amovible, la plaque de répartition (31) étant traversée par des ouvertures de passage pour des éléments de positionnement (33) portés par la plaque support (18), et recevant des colonnes d'instrumentation verticales (27) dans des positions correspondant aux positions des éléments tubulaires (28) de traversée du couvercle (3) et des moyens d'accrochage (37) sur sa face supérieure et étant solidaire sur sa face inférieure dirigée vers la plaque support (18), d'une pluralité de tubes de guidage verticaux (38) dans des positions correspondant à celles d'entretoises tubulaires (17) des équipements internes supérieurs (20) dans lesquels les tubes de guidage (38) peuvent être engagés, chacun de ces tubes (38) recevant au moins un conduit de mesure (26) provenant d'une colonne d'instrumentation (27) pour son guidage à travers les équipements internes supérieurs (20), depuis la plaque de répartition (31) jusqu'à l'entrée d'un tube d'instrumentation (30) d'un assemblage combustible (5).

2. Dispositif d'instrumentation suivant la revendication 1 caractérisé par le fait que chacune des colonnes d'instrumentation (27) comporte un passage axial pour une pluralité de conduits de mesure (26) et au moins une lumière (39) communiquant avec le passage axial, au-dessus de la plaque de répartition (31), pour permettre le passage des conduits de mesure (26) entre le colonne d'instrumentation et une zone de traversée de la plaque de répartition (31).

3. Dispositif d'instrumentation suivant la revendication 2, caractérisé par le fait que chacune des colonnes d'instrumentation (27) est engagée dans une douille (36) verticale solidaire de la face supérieure de la plaque de répartition (31).

4. Dispositif d'instrumentation suivant l'une quelconque des revendications 1, 2 et 3, caractérisé par le fait que, dans chacune des zones de traversée d'un conduit de mesure (26), la plaque de répartition (31) porte un dispositif de passage étanche (49) du conduit de mesure (26).

5. Dispositif d'instrumentation suivant la revendication 1, caractérisé par le fait que chacune des colonnes d'instrumentation (27) est reliée, à sa partie supérieure à un dispositif (46) de jonction démontable, de tronçons des conduits de mesure (26) passant dans la colonne d'instrumentation et de tronçons de ces conduits de mesure reliés à un local d'instrumentation disposé au voisinage de la cuve du réacteur.

6. Dispositif d'instrumentation suivant la revendication 1, caractérisé par le fait que chacune des colonnes d'instrumentation (27) est reliée à la plaque de répartition (31) avec une certaine latitude de déplacement vertical et comporte un dispositif (43, 44, 45) permettant de la déplacer dans la direction verticale, depuis l'extérieur du couvercle, entre une position haute de liaison étanche au tube adaptateur (28) correspondant et une position basse sans jonction étanche au tube adaptateur (28).

7. Dispositif d'instrumentation suivant la revendication 1, caractérisé par le fait qu'autour de chacun des tubes de guidage verticaux (38), dans sa partie supérieure reliée à la face inférieure de la plaque de répartition (31) est placé un clapet (59) fixé sous la plaque de répartition (31) avec une certaine latitude de déplacement vertical, pour la fermeture étanche de l'extrémité 51 de l'entretoise tubulaire (17) dans laquelle est engagé le tube de guidage (38), afin d'éviter une circulation du fluide de refroidissement du réacteur, autour du tube de guidage (38), pendant le fonctionnement du réacteur nucléaire.

8. Dispositif d'instrumentation suivant la revendication 1, caractérisé par le fait que les moyens d'accrochage (37) de la plaque de répartition (31) sont constitués par des douilles cylindriques (37) ayant au moins une ouverture (37a) d'accrochage dans leur paroi latérale.

9. Procédé d'extraction d'un dispositif d'instrumentation du coeur d'un réacteur nucléaire, suivant l'une quelconque des revendications 1 à 8, caractérisé par le fait :

- qu'après démontage du couvercle de la cuve, on démonte les moyens de liaison amovibles (35) entre la plaque de répartition (31) et les plots verticaux (34) solidaires de la plaque de support et on soulève, dans la direction verticale, la plaque de répartition (31), par rapport aux équipements internes (20) sur une hauteur sensiblement égale à la hauteur du coeur du réacteur, les conduits de mesure (26) fixés sur la plaque de répartition (31) étant alors extraits des tubes d'instrumentation (30) des assemblages combustibles (5), qu'on extrait simultanément de la cuve (1) les équipements internes supérieurs (20) et la plaque de répartition (31) du dispositif d'instrumentation et qu'on dépose les équipements internes supérieurs et le dispositif d'instrumentation, en une seule opération sur un stand de stockage des équipements internes supérieurs du réacteur disposé sous eau dans une piscine entourant la cuve (1) du réacteur nucléaire.

10. Dispositif d'extraction et de mise en place d'un dispositif d'instrumentation suivant l'une quelconque des revendications 1 à 8, caractérisé par le fait qu'il comporte, montées dans une structure connue de manutention des équipements internes supérieurs du réacteur nucléaire comportant un moyen (78) de liaison à un pont de levage associé au réacteur nucléaire, des tiges de levage (66) montées coulissantes dans la direction verticale dans la structure de manutention des équipements internes supérieurs (20), au moins un moyen (80, 82) de déplacement vertical des tiges de levage (66) dans la structure de manutention des équipements internes supérieurs, des moyens (65, 65a) de liaison amovibles de la partie inférieure de chacune des tiges verticales de levage (66) à un moyen d'accrochage (37) de la plaque de répartition (31) et des colonnes de guidage vertical (63) comportant à leur partie inférieure des moyens de liaison amovibles (64) aux éléments de positionnement verticaux (33) portés par la plaque de support (18), de façon à assurer un guidage continu de la plaque de répartition (31) dans la structure de manutention des équipements internes supérieurs, lors d'un déplacement dans la direction verticale par l'intermédiaire des tiges de levage (66).

11. Dispositif suivant la revendication 10, caractérisé par le fait que les moyens de déplacement dans la direction verticale des tiges de levage (66) sont constituées par un palonnier (80) fixé aux tiges (66) et relié à un treuil de levage (82) fixé sur la structure de manutention des équipements internes supérieurs.

**Patentansprüche**

1.  Instrumentierungsvorrichtung des Kerns eines Druckwasserkernreaktors mit einem im wesentlichen zylinderförmigen Behälter (1), der vertikal angeordnet ist und in seinem oberen Bereich durch einen Deckel (3) verschlossen ist, einem Kern (4), bestehend aus nebeneinander angeordneten Brennelementkassetten (5), die vertikal im Inneren des Behälters (1) des Reaktors angeordnet sind, einem oberhalb des Kerns angeordneten Aufbau (20), der innere obere Ausrüstung genannt wird und eine obere Kernplatte (16) aufweist, die auf den Brennelementkassetten (5) ruht und einer Trägerplatte (18), die oberhalb der Platte des Kerns (16) angeordnet ist, wobei die Platten horizontal orientiert sind und untereinander durch vertikale Zwischenwände (17) verbunden sind und mit einer Gruppe rohrförmiger Elemente (23, 25, 28), die den Deckel (3) durchqueren, wobei, die Instrumentierungsvorrichtung mehrere Meßkanäle (26) aufweist, in denen Neutronenflußdetektoren angeordnet werden können und die den Deckel durchqueren und die jeweils in ein Instrumentierungsrohr (30) einer Brennelementkassette (5) eindringen,
dadurch gekennzeichnet,
daß die Instrumentierungsvorrichtung außerdem zwischen dem Deckel des Behälters (3) und der Trägerplatte (18) eine Platte zur Verteilung und Führung (31) der Meßkanäle (26) aufweist, die auf der Trägerplatte (18) in einer parallelen Anordnung oberhalb dieser Platte (18) befestigt ist über vertikale Bolzen (34), die auf der Trägerplatte (18) befestigt sind, auf deren Oberseite die Verteilungsplatte (31) abnehmbar befestigt ist, wobei die Verteilungsplatte (31) von Durchgangsöffnungen für die Positionierungselemente (33) durchquert wird, die von der Trägerplatte (18) getragen werden und wobei die Verteilungsplatte vertikale Instrumentierungssäulen (27) an Stellen aufnimmt, die den Lagen der rohrförmigen Elemente (28) zum Durchqueren des Deckels (3) entsprechen und wobei die Verteilungsplatte auf ihrer oberen Fläche Befestigungsmittel (37) aufnimmt und mit ihrer unteren Oberfläche, die auf die Trägerplatte (18) gerichtet ist, mit einer Mehrzahl von vertikalen Führungsrohren (38) fest verbunden ist in Lagen, die denen der rohrförmigen Zwischenwandung (17) der inneren oberen Ausrüstung (20) entsprechen, in die die Führungsrohre (38) eingeführt werden können, wobei jedes dieser Rohre (38) mindestens einen Meßkanal (26) aufnimmt, der von einer Meßkolonne (27) ausgeht, zu dessen Führung durch die inneren oberen Ausrüstungen (20), ausgehend von der Verteilungsplatte (31) bis zum Eingang eines Instrumentierungsrohrs (30) einer Brennelementkassette (5).

2.  Instrumentierungsvorrichtung nach Anspruch 1, dadurch gekennzeichnet, daß jede der Instrumentierungssäulen (27) einen axialen Durchgang für mehrere Meßkanäle (26) und mindestens eine Öffnung (39) aufweist, die mit dem axialen Durchgang verbunden ist, oberhalb der Verteilungsplatte (31), um den Durchgang von Meßkanälen (26) zwischen der Instrumentierungssäule und einem Durchgangsbereich durch die Verteilungsplatte (31) zu ermöglichen.

3.  Instrumentierungsvorrichtung nach Anspruch 2, dadurch gekennzeichnet, daß jede der Instrumentierungssäulen (27) in eine vertikale Hülse (36) eingeführt ist, die mit der oberen Oberfläche der Verteilungsplatte (31) fest verbunden ist.

4.  Instrumentierungsvorrichtung nach einem der Ansprüche 1, 2 und 3, dadurch gekennzeichnet, daß in jedem der Durchgangsbereiche eines Meßkanals (26) die Verteilungsplatte (31) eine dichte Durchgangsvorrichtung (49) für den Meßkanal (26) aufweist.

5. Instrumentierungsvorrichtung nach Anspruch 1, dadurch gekennzeichnet, daß jede der Instrumentierungssäulen (27) mit ihrem oberen Bereich mit einer demontierbaren Verbindungsvorrichtung der Abschnitte der Meßkanäle (26) verbunden ist, die in die Instrumentierungssäule eingeführt werden und mit Abschnitten von Meßkanälen, die mit einem Instrumentierungsort verbunden sind, der in der Nähe des Reaktorbehälters liegt.

6. Instrumentierungsvorrichtung nach Anspruch 1, dadurch gekennzeichnet, daß jede der Instrumentierungssäulen (27) mit der Verteilungsplatte (31) mit einem bestimmten vertikalen Spiel verbunden ist und eine Vorrichtung (43, 44, 45) aufweist, die es ermöglicht, die Platte in vertikaler Richtung von außerhalb des Deckels zwischen einer oberen dichten Verbindungsstellung entsprechender Adapterrohre (28) und einer unteren Stellung ohne dichte Verbindung mit den Adapterrohren (28) zu bewegen.

7. Instrumentierungsvorrichtung nach Anspruch 1, dadurch gekennzeichnet, daß um jedes der vertikalen Führungsrohre (38) in dessen oberem Bereich, der mit der Unterseite der Verteilungsplatte (31) verbunden ist, eine Klappe (59) angeordnet ist, die unter der Verteilungsplatte (31) mit einem bestimmten vertikalen Spiel verbunden ist, zum dichten Abschluß des Endes 51 der rohrförmigen Zwischenwand (17), in der das Führungsrohr (38) eingeführt ist, um eine Kühlfluidzirkulation des Reaktors um die Rührungsrohre (38) während des Betriebs des Kernreaktors zu vermeiden.

8. Instrumentierungsvorrichtung nach Anspruch 1, dadurch gekennzeichnet, daß die Befestigungsmittel (37) der Verteilungsplatte (31) aus zylinderförmigen Buchsen (37) bestehen, mit mindestens einer Befestigungsöffnung (37a) in deren Seitenwand.

9. Verfahren zum Herausziehen einer Instrumentierungsvorrichtung aus einem Kern eines Kernreaktors nach einem der Anprüche 1-8, dadurch gekennzeichnet, daß:
   - nach der Demontage des Deckels des Behälters die abnehmbaren Verbindungsorgane (35) zwischen der Verteilungsplatte (31) und die vertikalen Bolzen (34), die mit der Trägerplatte verbunden sind, demontiert werden und in Vertikalrichtung die Verteilungsplatte (31) von den inneren Ausrüstungen (20) auf eine Höhe abgehoben wird, die im wesentlichen gleich der Höhe des Reaktorkerns ist, wobei die auf der Verteilungsplatte (31) befestigten Meßkanäle (26) aus den Instrumentierungsrohren (30) der Brennelementkassetten (5) herausgezogen sind, daß gleichzeitig die oberen inneren Ausrüstungen aus dem Behälter (1) und die Verteilungsplatte (31) der Instrumentierungsvorrichtung herausgezogen werden und die oberen inneren Ausrüstungen und die Instrumentierungsvorrichtung in einem einzigen Vorgang auf einem Lagerständer für die inneren oberen Ausrüstungen des Reaktors abgelegt werden, der unter Wasser in einem Becken angeordnet ist, das den Behälter (1) des Kernreaktors umgibt.

10. Vorrichtung zum Herausziehen und Plazieren einer Instrumentierungsvorrichtung nach einem der Ansprüche 1-8, gekennzeichnet durch mindestens eine Vorrichtung (80, 82) zum vertikalen Verschieben von Hebelstangen (66) in einer Handhabungs-vorrichtung der oberen inneren Ausrüstungen, durch abnehmbare Verbindungsorgane (65, 65a) des unteren Bereichs einer jeden vertikalen Hebelstange (66) mit einem Befestigungsorgan (37) der Verteilungsplatte (31) und durch vertikale Führungssäulen (63), die an ihrem unteren Ende abnehmbare Verbindungsorgane (64) zur Verbindung mit den vertikalen Positionierungselementen (33) aufweisen, die von der Trägerplatte (18) getragen werden, derart, daß eine kontinuierliche Führung der Verteilungsplatte (31) in der Handhabungsanordnung der oberen inneren Ausrüstungen während einer Bewegung in senkrechter Richtung durch die Hebestangen (66) gewährleistet wird, wobei diese Organe bzw. Vorrichtungen in einer bekannten Handhabungsanordnung der inneren oberen Ausrüstungen des Kernreaktors montiert sind, die eine Verbindungsvorrichtung mit einer Hebebrücke aufweist, die zu dem Kernreaktor gehört sowie Hebestangen (66), die gleitend in Vertikalrichtung in der Handhabungsanordnung der oberen inneren Einrichtungen (20) angeordnet sind.

11. Vorrichtung nach Anspruch 10, dadurch gekennzeichnet, daß die Vorrichtungen zur vertikalen Verschiebung der Hebestäbe (66) aus einer Krantraverse (80) bestehen, die an den Stangen (66) befestigt ist und mit einer Hebewinde (62) verbunden ist, die auf der Handhabungsanordnung der oberen inneren Ausrüstungen befestigt ist.

## Claims

1. Instrumentation device for the core of a pressurized water nuclear reactor comprising a vessel of overall cylindrical shape (1) arranged vertically and closed by a closure head (3) in its upper part, a core (4) consisting of adjoining fuel assemblies (5) placed vertically inside the reactor vessel (1), a structure (20) arranged above the core, referred to as the upper internal equipment, comprising an upper core plate (16) resting on the assemblies (5) and a support plate (18) arranged above the core plate (16), which are horizontal and interconnected by vertical braces (17) and a set of tubular members (23, 25, 28) for passing through the closure head (3), the instrumentation device comprising a plurality of measurement conduits (26) in which neutron flux detectors can be installed, passing through the closure head and each entering an instrumentation tube (30) of a fuel assembly (5), characterized in that the instrumentation device additionally comprises, between the vessel closure head (3) and the support plate (18), a plate (31) for distributing and guiding the measurement conduits (26), which is fastened onto the support plate (18) in a parallel arrangement and above this plate (18), by means of vertical stanchions (34) fastened onto the support plate (18), to the upper part of which stanchions the distribution plate (31) is removably attached, the distribution plate (31) being pierced by passage openings for positioning members (33) carried by the support plate (18), and receiving vertical instrumentation columns (27) in positions corresponding to the positions of the tubular members (28) passing through the closure head (3) and attachment means (37) on its upper face and being integrally attached on its lower face directed towards the support plate (18) to a plurality of vertical guide tubes (38) in positions corresponding to those of tubular braces (17) for the upper internal equipement (20) in which the guide tubes (38) can be engaged, each of these tubes (38) receiving at least one measurement conduit (26) originating from an instrumentation column (27) in order to guide it through the upper internal equipment (20) from the distribution plate (31) to the entry of an instrumentation tube (30) of a fuel assembly (5).

2. Instrumentation device according to claim 1 characterized in that each of the instrumentation columns (27) comprises an axial passage for a plurality of measurement conduits (26) and at least one opening (39) communicating with the axial passage, above the distribution plate (31), to permit the measurement conduits (26) to pass through between the instrumentation column and a passage region of the distribution plate (31).

3. Instrumentation device according to claim 2, characterized in that each of the instrumentation columns (27) is engaged in a vertical bush (36) integrally attached to the upper face of the distribution plate (31).

4. Instrumentation device according to any one of claims 1, 2 and 3, characterized in that the distribution plate (31) carries a leakproof passage device (49) for the measurement conduit (26) in each of the passage regions of a measurement conduit (26).

5. Instrumentation device according to claim 1, characterized in that each of the instrumentation columns (27) is connected, at its upper end, to a demountable device (46) for joining the lengths of the measurement conduits (26) running through the instrumentation columns and lengths of these measurement conduits connected to an instrument room arranged in the vicinity of the reactor core.

6. Instrumentation device according to claim 1, characterized in that each of the instrumentation columns (27) is connected to the distribution plate (31) with a certain freedom of vertical movement and comprises a device (43, 44, 45) allowing it to be moved in the vertical direction, from outside the closure head, between a high position of leakproof coupling to the corresponding adaptor tube (28) and a low position with no leakproof coupling to the adaptor tube (28).

7. Instrumentation device according to claim 1, characterized in that around each of the vertical guide tubes (38), in its upper part connected to the lower face of the distribution plate (31), a valve (59) is placed, which is attached under the distribution plate (31) with a certain freedom of vertical movement, and for leakproof closure of the end (51) of the tubular brace (17) in which the guide tube (38) is engaged, in order to prevent any circulation of the reactor coolant fluid around the guide tube (38) while the nuclear reactor is operating.

8. Instrumentation device according to claim 1, characterized in that the attachment (37) means for the distribution plate (31) consist of cylindrical bushes (37) having at least one attachment opening (37a) in their side wall.

9. Process for withdrawing an instrumentation device from the core of a nuclear reactor according to any of claims 1 to 8, characterized in that:

- after diassembling the vessel closure head, the removable coupling means (35) between the distribution plate (31) and the vertical stanchions (34) forming an integral part of the support plate are dismantled and the distribution plate (31) is lifted in the vertical direction relative to the internal equipment (20) over a height substantially equal to the height of the reactor core, the measurement conduits (26) attached to the distribution plate (31) being thus withdrawn from the instrumentation tubes (30) of the fuel assemblies (5), the upper internal equipment (20) and the distribution plate (31) of the instrumentation device are simultaneously withdrawn from the vessel (1) and the upper internal equipment and the instrumentation device are set down, in a single operation, on a stand for storing the upper internal equipment of the reactor arranged under water in a pool surrounding the vessel (1) of the nuclear reactor.

10. Device for withdrawing and installing an instrumentation device according to any one of claims 1 to 8, characterized in that it comprises, mounted in a known structure for handling the upper internal equipment of the nuclear reactor comprising means (78) for coupling to a lifting gantry associated with the nuclear reactor, lifting rods (66) mounted so as to be vertically slideable in the structure for handling the upper internal equipment (20), at least one device (80, 82) for moving the lifting rods (66) vertically in the structure for handling the upper internal equipment, removable means (65, 65a) for coupling the lower part of each of the vertical lifting rods (66) to attachment means (37) for the distribution plate (31) and vertical guide columns (63) comprising at their lower end removable means for coupling (64) to the vertical positioning members (33) carried by the support plate (18), so as to provide the distribution plate (31) with continuous guiding in the structure for handling the upper internal equipment during vertical movement by means of the lifting rods (66).

11. Device according to claim 10, characterized in that the means for moving the lifting rods (66) in the vertical direction consist of a sling bar (80) fastened to the rods (66) and connected to a lifting hoist (82) fastened to the structure for handling the upper internal equipment.

# FIG.1

FIG.2

FIG.3

FIG.4

FIG.5

FIG.6

FIG.7

FIG.8